# EUROPÄISCHE PATENTANMELDUNG

(11) **EP 4 850 854 A1**
(43) Veröffentlichungstag der Anmeldung: **09.12.2026**
(21) Anmeldenummer: 25181025.5
(22) Anmeldetag: 05.06.2025
(51) Int. Cl.: B23Q 3/157, B23Q 7/04

(54) **WERKZEUGMASCHINE**

(71) Anmelder: POS GmbH & Co. KG, 73098 Rechberghausen (DE)
(72) Erfinder: Helle, Michael, 73098 Rechberghausen (DE)
(74) Vertreter: Ruckh, Rainer Gerhard

(57) **Zusammenfassung**

Die Erfindung betrifft eine Werkzeugmaschine (1) mit einer eine Spindel (7) aufweisenden Spindeleinheit (3) und einem Werkzeugwechsler (4). Der Werkzeugwechsler (4) ist zur Aufnahme (11) von Werkzeugen (10) und Werkstücken (8) ausgebildet, wobei einzelne Werkzeuge (10) oder Werkstücke (8) durch eine Transferbewegung des Werkzeugwechslers (4) der Spindeleinheit (3) zuführbar sind. Der Werkzeugwechsler (4) weist eine Reihenanordnung von adressierten Aufnahmen (11) auf, wobei die Aufnahmen (11) jeweils eine Werkzeugaufnahme (12) aufweisen. Die Aufnahmen (11) weisen zusätzlich eine Werkstückaufnahme (13) auf, die zur Aufnahme (11) von Messeinheiten ausgebildet sind, wobei mit einer der Spindel (7) zugeführten Messeinheit die Geometrie eines Werkstücks (8) vermessen werden kann.

## Beschreibung

Die Erfindung betrifft eine Werkzeugmaschine.

Derartige Werkzeugmaschinen dienen generell zur Bearbeitung von Werkstücken. Dabei sind typische Bearbeitungsvorgänge, die mit der Werkzeugmaschine durchgeführt werden, Fräsen, Bohren und Schleifen.

Das zu bearbeitende Werkstück ist typischerweise in einem Nullpunktspannsystem eingespannt und wird dann mittels eines an einer Spindel einer Spindeleinheit gelagerten Werkzeugs bearbeitet.

Da mit der Werkzeugmaschine unterschiedliche Werkstücke bearbeitet werden müssen, wobei hierbei mit unterschiedlichen Werkzeugen verschiedene Bearbeitungsvorgänge durchzuführen sind, müssen hierzu Werkzeuge an der Spindel ausgetauscht werden.

Um diese Anforderungen zu erfüllen, ist es bekannt, der Werkzeugmaschine einen Werkzeugwechsler zuzuordnen, in welchem eine Mehrzahl von Werkzeugen gelagert ist. Dabei kann in einem automatisierten Prozess ein Werkzeug aus dem Werkzeugwechsler entnommen und an der Spindel befestigt werden. Umgekehrt kann auch nach Durchführung eines Bearbeitungsvorgangs mittels eines Werkzeugs dieses im Werkzeugwechsler abgelegt werden.

Aus der DE 10 2017 101 737 B4 ist eine Werkzeug-Wechselvorrichtung für eine Werkzeugmaschine bekannt, mittels derer Werkzeuge einer Wechselposition zuführbar sind, von welcher das jeweilige Werkzeug einer Werkzeugaufnahme der Werkzeugmaschine zuführbar ist, mit einer Transfereinheit zum Transport der Werkzeuge. Die Transfereinheit weist eine Anzahl von Kopplungsmitteln auf, mittels derer Werkstücke an die Zuführbewegung der Werkzeuge gekoppelt sind, so dass die Werkstücke mittels der Transfereinheit der Wechselposition zuführbar sind, von welcher das jeweilige Werkstück einer Bearbeitungsposition zuführbar ist. Die Transfereinheit weist eine diskrete Anordnung von Werkzeugplätzen zur Aufnahme von Werkzeugen auf, wobei jeweils ein Kopplungsmittel mechanisch an einem Werkzeugplatz angebunden ist und einen Werkstückplatz zur Aufnahme von Werkstücken aufweist, wobei jedes Kopplungsmittel von einem L-Profil gebildet ist, dessen oberes Ende im Bereich des jeweiligen Werkzeugplatzes befestigt ist und dessen horizontaler Schenkel einen Werkstückplatz bildet.

Der Erfindung liegt die Aufgabe zugrunde, eine Werkzeugmaschine mit erweiterter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Werkzeugmaschine mit einer eine Spindel aufweisenden Spindeleinheit und einem Werkzeugwechsler. Der Werkzeugwechsler ist zur Aufnahme von Werkzeugen und Werkstücken ausgebildet, wobei einzelne Werkzeuge oder Werkstücke durch eine Transferbewegung des Werkzeugwechslers der Spindeleinheit zuführbar sind. Der Werkzeugwechsler weist eine Reihenanordnung von adressierten Aufnahmen auf, wobei die Aufnahmen jeweils eine Werkzeugaufnahme aufweisen. Die Aufnahmen weisen zusätzlich eine Werkstückaufnahme auf, die zur Aufnahme von Messeinheiten ausgebildet sind, wobei mit einer der Spindel zugeführten Messeinheit die Geometrie eines Werkstücks vermessen werden kann.

Die erfindungsgemäße Werkzeugmaschine weist durch den erfindungsgemäß ausgebildeten Werkzeugwechsler, der mit der Spindeleinheit zusammenwirkt, eine erhöhte Funktionalität auf.

Der Werkzeugwechsler weist eine Mehrfachanordnung von Aufnahmen auf, die eine Reihenanordnung bilden, insbesondere derart, dass diese in Richtung der Transferbewegungen des Werkzeugwechslers in Abstand hintereinander angeordnet sind.

Zumindest ein Teil der Aufnahmen, vorteilhaft alle Aufnahmen, weisen eine Mehrfachfunktionalität derart auf, dass diese nicht nur Werkzeugaufnahmen, sondern auch Werkstückaufnahmen aufweisen.

Dabei ist jede Werkzeugaufnahme zur Aufnahme eines Werkzeugs und jede Werkstückaufnahme zur Aufnahme eines Werkstücks ausgebildet.

Den Aufnahmen sind eindeutige Adressen zugeordnet, wodurch es möglich ist, die Aufnahme mit einer bestimmten Aufnahme durch die Transferbewegung des Werkzeugwechslers in eine Entnahmeposition zu verfahren, in welcher die Spindeleinheit an dieser Aufnahme einen Entnahme- oder Zuführvorgang durchführen kann. Vorteilhaft weist die Werkzeugmaschine eine Steuereinheit auf, die alle Funktionen der Werkzeugmaschine, insbesondere die Spindeleinheit und den Werkzeugwechsler steuert. Durch einen automatisierten Programmablauf in der Steuereinheit oder eine Benutzereingabe in die Steuereinheit wird eine Adresse vorgegeben, wodurch die Steuereinheit die Transferbewegung des Werkzeugwechslers so steuert, dass die Aufnahme mit dieser Adresse in die Entnahmeposition verfahren wird.

Dann kann mit der Spindel der Spindeleinheit ein in der Werkzeugaufnahme dieser Aufnahme gelagertes Werkzeug entnommen werden, so dass mit diesem Werkzeug, das an der Spindel befestigt ist, ein Bearbeitungsvorgang eines Werkstücks durchgeführt werden kann, wobei das Werkstück hierzu vorteilhaft in einem Nullpunktspannsystem an einer Bearbeitungsplattform der Werkzeugmaschine eingespannt ist. Ebenso kann nach einem Bearbeitungsvorgang ein Werkzeug von der Spindeleinheit in der Werkzeugaufnahme der Aufnahme abgelegt werden.

Alternativ kann mit der Spindeleinheit ein Werkstück aus der Werkstückaufnahme der Aufnahme entnommen und insbesondere dem Nullpunktspannsystem zugeführt werden. Ebenso kann ein Werkstück in der Werkstückaufnahme abgelegt werden.

Zur Durchführung dieser Prozesse wird ein Werkstückgreifer, der zum Aufgreifen von Werkstücken ausgebildet ist, eingesetzt.

Der Werkstückgreifer kann gemäß einer ersten Variante an einem Spindelstock der Spindeleinheit dauerhaft befestigt sein.

Gemäß einer zweiten Variante bildet der Werkstückgreifer ein Werkzeug, das an der Spindel der Werkzeugmaschine befestigt werden kann. Der Werkstückgreifer kann wie die anderen Werkzeuge in einer Werkzeugaufnahme einer Aufnahme abgelegt sein und bei Bedarf von der Spindel aus dieser entnommen werden.

Gemäß einer konstruktiv vorteilhaften Ausgestaltung weist eine Aufnahme eine Werkzeugaufnahme und eine unterhalb dieser liegende Werkstückaufnahme mit einer Auflagefläche auf, wobei auf der Auflagefläche ein Werkstück oder ein Werkstückspanner mit einem darin eingespannten Werkstück gelagert werden kann.

Die Werkstückaufnahme ermöglicht somit eine alleinige Lagerung eines Werkzeugs oder eines Werkstücks, das in einem Werkstückspanner eingesetzt ist, wobei diese Baueinheit für eine Lagerung in einem Nullpunktspannsystem ausgebildet ist.

Gemäß einer ersten Variante bildet die Werkstückaufnahme mit der Werkzeugaufnahme ein Bauteil, d.h. die Werkstückaufnahme und die Werkzeugaufnahme sind unlösbar miteinander verbunden und bilden eine Baueinheit.

Alternativ ist die Werkstückaufnahme über Kopplungselemente, insbesondere Schraubverbindungen, lösbar mit der Werkzeugaufnahme verbunden. In diesem Fall können unterschiedliche Werkstückaufnahmen an einer Werkzeugaufnahme montiert werden.

Erfindungsgemäß ist die Funktionalität der Werkzeugmaschine dadurch erweitert, dass in der Werkzeugmaschine Werkstücke mit einer oder mehreren Messeinheiten vermessen werden können. Mit der oder jeder Messeinheit wird die Geometrie eines Werkstücks und vorteilhaft auch dessen Lage im Nullpunktspannsystem bestimmt, wobei hierzu natürlich das betreffende Werkstück im Nullpunktspannsystem eingespannt ist.

Die oder jede Messeinheit ist zur Vermessung der Geometrie von Werkstücken ausgebildet, wobei hierzu vorteilhaft die Messeinheit von einem taktilen Messtaster gebildet ist.

Die Vermessung des jeweiligen Werkstücks erfolgt derart, dass die Messeinheit, insbesondere der taktile Messtaster, an der Spindel der Werkzeugmaschine befestigt ist, wobei mit dieser die Messeinheit entlang der Oberfläche des Werkstücks geführt ist.

Ein wesentlicher Aspekt der Erfindung besteht darin, dass die oder jede Messeinheit in einer Werkzeugaufnahme einer Aufnahme gelagert wird. Die Messeinheit wird somit logistisch wie ein Werkzeug behandelt, in dem dieses mit der Spindel in eine spezifische adressierte Werkzeugaufnahme abgelegt und mit der Spindel auch wieder an der Werkzeugaufnahme entnommen wird.

Damit können die Messeinheiten ohne konstruktiven Mehraufwand in der erfindungsgemäßen Werkzeugmaschine insbesondere in deren Werkzeugwechsler integriert werden.

Für den Fall, dass eine Messeinheit, insbesondere ein taktiler Messtaster, der Geometrie eines Werkzeugs entspricht, kann eine Werkzeugaufnahme wahlweise für die Lagerung der Messeinheit oder des Werkzeugs genutzt werden.

Ist dies nicht der Fall, wird eine Werkzeugaufnahme ausschließlich für die Ablage der betreffenden Messeinheit genutzt.

Die Vermessung eines Werkstücks kann zu frei wählbaren Zeiten, insbesondere zu von der Steuereinheit vorgegebenen Zeiten stattfinden. Insbesondere können Vermessungen von Werkstücken nachts durchgeführt werden, da dann aufgrund der fehlenden Sonneneinstrahlung keine Temperaturschwankungen vorliegen, welche die Vermessung der Geometrien von Werkstücken verfälschen könnten.

Für den Fall, dass nur eine Messeinheit vorhanden ist, ist entsprechend hierzu nur eine der Werkzeugaufnahmen für die Aufnahme der Messeinheit vorgesehen.

Für den Fall, dass mehrere Messeinheiten vorhanden sind, ist eine hierzu entsprechende Anzahl der Werkzeugaufnahmen für die Aufnahme der Messeinheiten vorgesehen, wobei typischerweise deren Anzahl gering ist gegenüber der Gesamtzahl der Werkzeugaufnahmen.

Die Steuereinheit steuert generell die Zufuhr und Entnahme von Werkzeugen zu bzw. von Werkzeugaufnahmen des Werkzeugwechslers und ebenso die Zufuhr und Entnahme von Werkstücken zu bzw. von Werkstückaufnahmen des Werkzeugwechslers.

Zudem steuert die Steuereinheit die Vermessung von Werkstücken mittels Messeinheiten. Dabei ist bei der Vermessung eines Werkstücks die jeweilige Messeinheit an der Spindel der Spindeleinheit mit der Steuereinheit verbunden, so dass mittels der Messeinheit ermittelte Messwertedaten in der Steuereinheit abgespeichert werden können. Anhand der abgespeicherten Messdaten wird eine umfangreiche Prozesskontrolle ermöglicht.

Ein weiterer Vorteil der Erfindung besteht darin, dass der Werkzeugwechsler in der Werkzeugmaschine integriert ist, wobei der Werkzeugwechsler vorteilhaft in einem Gehäuse der Werkzeugmaschine angeordnet ist. Bei der erfindungsgemäßen Werkzeugmaschine wird somit nur ein geringer Einbauraum in einer Fabrikhalle oder dergleichen benötigt.

Die Erfindung wird im Folgenden anhand der Zeichnungen erläutert. Es zeigen:
- Figur 1:: Schematische Darstellung eines Ausführungsbeispiels der erfindungsgemäßen Werkzeugmaschine mit einer Spindeleinheit, einem Werkzeugwechsler und einer Bearbeitungsplattform.
- Figur 2:: Seitenansicht eines Teils der Werkzeugmaschine mit der Spindeleinheit und der Bearbeitungsplattform.
- Figur 3:: Einzeldarstellung einer Aufnahme des Werkzeugwechslers der Werkzeugmaschine gemäß Figur 1
a) Frontansicht
b) Seitenansicht
- Figur 4:: Ausschnitt des Werkzeugwechslers gemäß Figur 1.

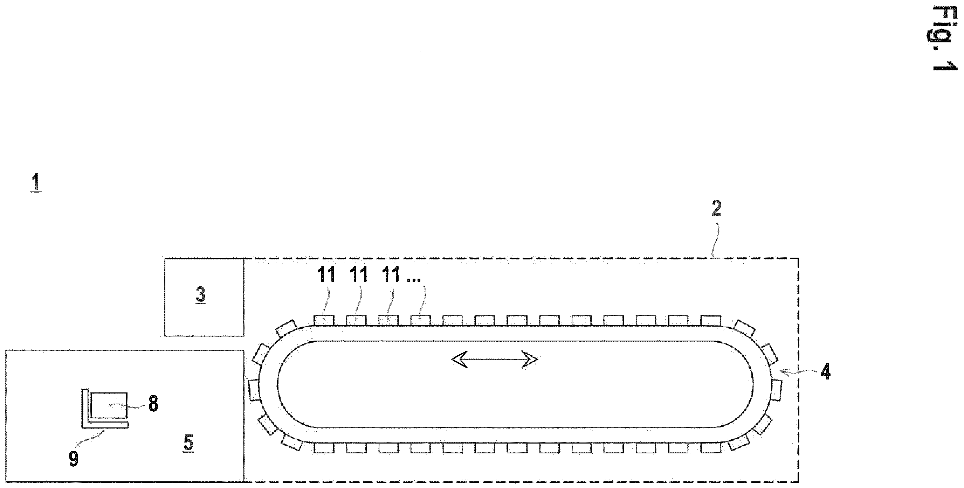

Figur 1 zeigt schematisch und nicht maßstabsgetreu ein Ausführungsbeispiel der erfindungsgemäßen Werkzeugmaschine 1, deren Komponenten in einem Gehäuse 2 integriert sind.

Die Werkzeugmaschine 1 umfasst eine Spindeleinheit 3, einen Werkzeugwechsler 4 und eine Bearbeitungsplattform 5.

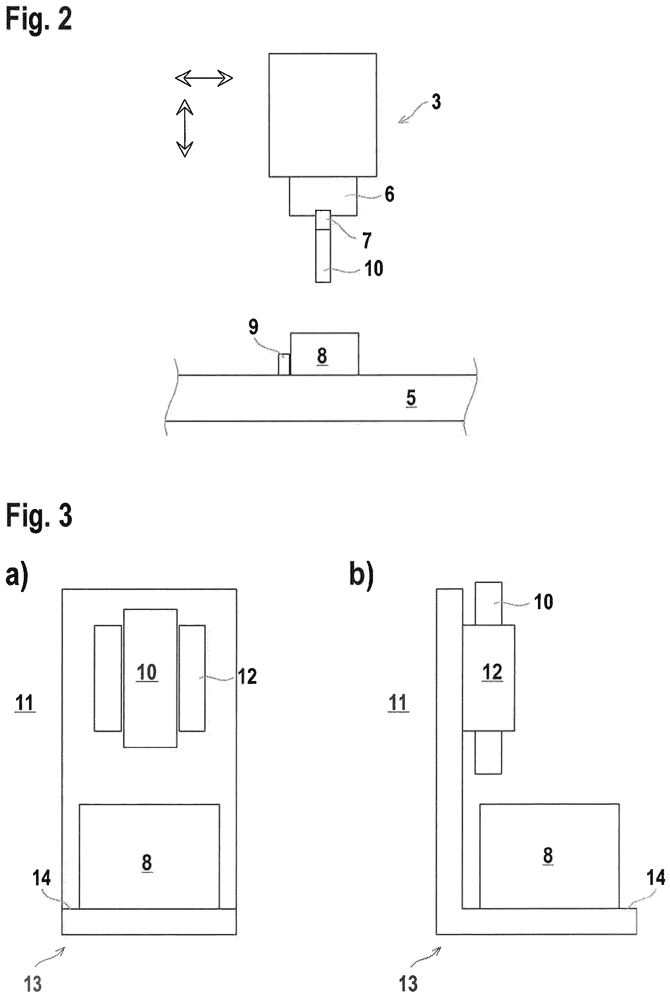

Die Spindeleinheit 3 weist, wie aus Figur 1 ersichtlich, eine in einem Spindelstock 6 drehbare Spindel 7 auf, die mittels eines nicht dargestellten Antriebs um ihre Längsachse gedreht werden kann. Die Spindeleinheit 3 ist weiterhin in horizontaler und vertikaler Richtung verfahrbar, wie mit den Doppelpfeilen in Figur 2 veranschaulicht. Vorteilhaft ist die Werkzeugmaschine 1 eine 5-Achs-Maschine, mittels derer fünf Seiten eines Werkstücks 8 bearbeitet werden können. Das zu bearbeitende Werkstück 8 ist hierzu in einem Nullpunktspannsystem 9 eingespannt (Figuren 1 und 2) und somit in einer Sollposition lagefixiert.

An der Spindel 7 ist, wie Figur 2 zeigt, ein Werkzeug 10 befestigt, mit dem das Werkstück 8 bearbeitet wird.

Typische Bearbeitungsvorgänge, die mit der Werkzeugmaschine 1 durchgeführt werden, sind Bohren, Fräsen und Schleifen.

Der Werkzeugwechsler 4 weist, wie Figur 1 zeigt, einen eine geschlossene Bahn bildenden Körper, insbesondere einen Kettenförderer, auf. Dieser wird mittels eines elektrischen Antriebs (nicht dargestellt) angetrieben und kann somit Transferbewegungen in und gegen den Uhrzeigersinn durchführen, wie in Figur 1 mit dem Doppelpfeil veranschaulicht.

An der Außenseite des so ausgebildeten Werkzeugwechslers 4 sind in Umfangsrichtung in Abstand zueinander liegende Aufnahmen 11 gelagert. Die Aufnahmen 11 sind vorteilhaft äquidistant zueinander angeordnet und bilden somit eine sich in Umfangsrichtung des Werkzeugwechslers 4 in einer horizontalen Ebene verlaufende Reihenanordnung.

Sämtliche Komponenten der Werkzeugmaschine 1, insbesondere die Spindeleinheit 3 und der Werkzeugwechsler 4, werden von einer zentralen Steuereinheit gesteuert (nicht dargestellt). Die Steuereinheit kann von einer SPS-Steuerung oder dergleichen gebildet sein.

Alle Aufnahmen 11 des Werkzeugwechslers 4 weisen einen Aufbau auf, wie für eine Aufnahme 11 in den Figuren 3a, 3b schematisch dargestellt.

Im oberen Bereich der Aufnahme 11 befindet sich eine Werkzeugaufnahme 12, die zur Lagerung eines Werkzeugs 10 ausgebildet ist.

Im unteren Bereich der Aufnahme 11 befindet sich eine Werkstückaufnahme 13, die zur Lagerung eines Werkstücks 8 ausgebildet ist.

Die Werkzeugaufnahme 12 bildet Klemm- oder Rastmittel aus, mittels derer ein Werkzeug 10 gehalten werden kann.

Die Werkstückaufnahme 13 weist ein Auflagesegment auf, dessen Oberseite eine Auflagefläche 14 bildet, auf welcher ein Werkstück 8 aufgelegt werden kann. Die Auflagefläche 14 verläuft in einer horizontalen Ebene.

Im vorliegenden Fall bilden die Werkzeugaufnahmen 12 und die Werkstückaufnahmen 13 ein Bauteil, d.h. sie sind unlösbar miteinander verbunden. Alternativ kann die Werkstückaufnahme 13 über Kopplungselemente, wie z.B. Schraubverbindungen an die Werkzeugaufnahme 12 angebunden sein, d.h. sie ist lösbar mit der Werkzeugaufnahme 12 verbunden.

Die Figuren 3a, 3b zeigen eine Werkstückaufnahme 13, auf welcher ein Werkstück 8 direkt abgelegt ist. Vorteilhaft ist das Werkstück 8 in einem Werkstückspanner eingespannt, so dass dann die Einheit bestehend aus Werkstück 8 und Werkstückspanner in der Werkstückaufnahme 13 abgelegt ist.

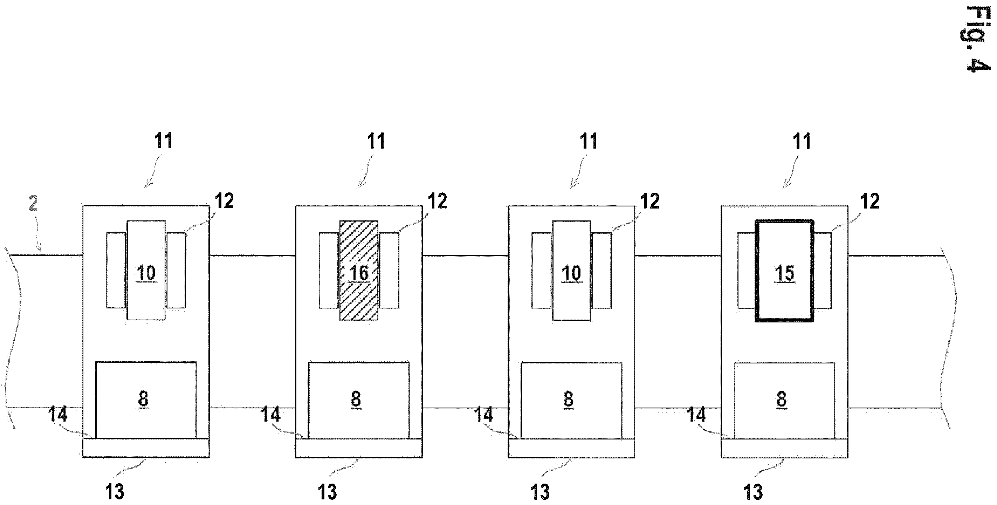

Figur 4 zeigt einen Ausschnitt des Werkzeugwechslers 4 mit mehreren Aufnahmen 11. Zwei Aufnahmen 11 weisen jeweils eine Werkzeugaufnahme 12 auf, in der ein Werkzeug 10, wie z.B. ein Bohrer, ein Fräser oder ein Schleifer gelagert ist.

Eine Aufnahme 11 weist eine Werkzeugaufnahme 12 auf, in der ein Werkstückgreifer 15 gelagert ist.

Eine Aufnahme 11 weist eine Werkstückaufnahme 13 auf, in der eine Messeinheit in Form eines taktilen Messtasters 16 gelagert ist.

Generell können mehrere Messeinheiten, insbesondere auch optische oder induktive Taster und dergleichen vorgesehen sein, die in unterschiedlichen Werkzeugaufnahmen 12 gelagert werden können.

Generell ist die Messeinheit zur Vermessung der Geometrie eines Werkstücks 8 ausgebildet.

Die Werkzeugaufnahme 12 kann spezifisch zur Lagerung einer Messeinheit ausgebildet sein. Im einfachsten Fall ist keine Adaption der Werkzeugaufnahme 12 an die Messeinheit notwendig, so dass wahlweise eine Messeinheit oder ein Werkzeug 10 in der Werkzeugaufnahme 12 gelagert werden kann.

Den Aufnahmen 11 des Werkzeugwechslers 4 ist jeweils eine Adresse zugeordnet, die in der Steuereinheit hinterlegt sind. Die Adressen kennzeichnen die Aufnahmen 11 eindeutig.

In der Steuereinheit ist weiterhin hinterlegt, welche Werkzeuge 10, Werkstücke 8 oder ggf. Messtaster 16 oder ein Werkstückgreifer 15 in den einzelnen mit Adressen gekennzeichneten Aufnahmen 11 abgelegt sind.

Damit kann der gesamte Betrieb der Werkzeugmaschine 1 mit der Steuereinheit gesteuert werden.

Um ein zu bearbeitendes Werkstück 8 aus dem Werkzeugwechsler 4 dem Nullpunktspannsystem 9 zuzuführen, wird zunächst die Aufnahme 11 mit dem Werkstückgreifer 15 in eine Entnahmeposition verfahren, in welcher die Spindel 7 den Werkstückgreifer 15 aufnimmt.

Dieser Vorgang kann für den Fall entfallen, dass der Werkstückgreifer 15 am Spindelstock 6 der Spindeleinheit 3 gelagert ist.

Dann wird der Werkzeugwechsler 4 verfahren, bis die Aufnahme 11 mit dem zu bearbeitenden Werkstück 8 in die Entnahmeposition eingefahren ist. Dann nimmt der Werkstückgreifer 15 das Werkstück 8 (das vorzugsweise auf einem Werkstückspanner gelagert ist) auf und führt es dem Nullpunktspannsystem 9 zu, wo es in einer Sollposition lagefixiert wird.

Anschließend wird der Werkstückgreifer 15 in der zugehörigen Aufnahme 11 abgelegt und ein geeignetes Werkzeug 10 aus einer weiteren Aufnahme 11 mit der Spindel 7 entnommen, wobei hierzu die jeweilige Aufnahme 11 in die Entnahmeposition eingefahren wird.

Nach Bearbeitung des Werkstücks 8 kann dieses wieder in der zugehörigen Aufnahme 11 abgelegt werden.

Erfindungsgemäß wird mit dem Messtaster 16, oder allgemein der Messeinheit, die Geometrie eines Werkstücks 8 vermessen. Auch dieser Vorgang wird mit der Steuereinheit gesteuert.

Die Steuereinheit fährt, nachdem wieder der Werkstückgreifer 15 an der Spindel 7 befestigt wurde, die Aufnahme 11 mit dem zu vermessenden Werkstück 8 in die Entnahmeposition. Dort nimmt der Werkstückgreifer 15 das Werkstück 8 (und vorzugsweise den Werkstückspanner, auf dem das Werkstück 8 gelagert ist) auf und führt es dem Nullpunktspannsystem 9 zu, wo das Werkstück 8 lagefixiert wird.

Nach Ablegen des Werkstückgreifers 15 in der zugehörigen Aufnahme 11 wird die Aufnahme 11 mit dem Messtaster 16 in die Entnahmeposition verfahren. Dort nimmt die Spindel 7 den Messtaster 16 auf, d.h. der Messtaster 16 wird selbsttätig an der Spindel 7 befestigt.

Dann führt die Spindel 7 den Messtaster 16 entlang der Oberfläche des Werkstücks 8, wodurch dessen Geometrie vermessen und auch die Lage zum Nullpunktspannsystem 9 bestimmt wird.

Die so ermittelten Messdaten werden in die Steuereinheit eingelesen und dort abgespeichert.

Anhand der gespeicherten Messdaten ist eine Prozesskontrolle möglich.

Die Vermessung eines Werkstücks 8 kann zu frei wählbaren Zeiten durchgeführt werden, so dass dadurch Bearbeitungsvorgänge der Werkzeugmaschine 1 nicht behindert werden.

Vorteilhaft werden derartige Messungen in der Nacht durchgeführt, da dann keine Sonneneinstrahlungen vorhanden sind, die zu Temperaturschwankungen des Werkstücks 8 und dadurch bedingt zu Messfehlern führen könnten.

### Bezugszeichenliste

- (1): Werkzeugmaschine
- (2): Gehäuse
- (3): Spindeleinheit
- (4): Werkzeugwechsler
- (5): Bearbeitungsplattform
- (6): Spindelstock
- (7): Spindel
- (8): Werkstück
- (9): Nullpunktspannsystem
- (10): Werkzeug
- (11): Aufnahme
- (12): Werkzeugaufnahme
- (13): Werkstückaufnahme
- (14): Auflagefläche
- (15): Werkstückgreifer
- (16): Messtaster

## Patentansprüche

1. Werkzeugmaschine (1) mit einer eine Spindel (7) aufweisenden Spindeleinheit (3) und einem Werkzeugwechsler (4), wobei der Werkzeugwechsler (4) zur Aufnahme (11) von Werkzeugen (10) und Werkstücken (8) ausgebildet ist, wobei einzelne Werkzeuge (10) oder Werkstücke (8) durch eine Transferbewegung des Werkzeugwechslers (4) der Spindeleinheit (3) zuführbar sind, **dadurch gekennzeichnet, dass** der Werkzeugwechsler (4) eine Reihenanordnung von adressierten Aufnahmen (11) aufweist, wobei die Aufnahmen (11) jeweils eine Werkzeugaufnahme (12) aufweisen, und wobei Aufnahmen (11) zusätzlich eine Werkstückaufnahme (13) aufweisen, und dass Werkzeugaufnahmen (12) zur Aufnahme (11) von Messeinheiten ausgebildet sind, wobei mit einer der Spindel (7) zugeführten Messeinheit die Geometrie eines Werkstücks (8) vermessen werden kann.

2. Werkzeugmaschine (1) nach Anspruch 1, **dadurch gekennzeichnet, dass** die oder jede Messeinheit ein taktiler Messtaster (16) ist.

3. Werkzeugmaschine (1) nach einem der Ansprüche 1 oder 2, **dadurch gekennzeichnet, dass** mittels einer an der Spindel (7) gelagerten Messeinheit ein in einem Nullpunktspannsystem (9) gelagertes Werkstück (8) vermessen wird.

4. Werkzeugmaschine (1) nach einem der Ansprüche 1 bis 3, **dadurch gekennzeichnet, dass** in einer Werkzeugaufnahme (12) wahlweise ein Werkzeug (10) oder eine Messeinheit gelagert ist.

5. Werkzeugmaschine (1) nach einem der Ansprüche 1 bis 3, **dadurch gekennzeichnet, dass** in einer Werkzeugaufnahme (12) nur eine Messeinheit gelagert werden kann.

6. Werkzeugmaschine (1) nach einem der Ansprüche 1 bis 5, **dadurch gekennzeichnet, dass** nur ein Teil der Werkzeugaufnahmen (12) zur Aufnahme (11) einer Messeinheit ausgebildet ist.

7. Werkzeugmaschine (1) nach einem der Ansprüche 1 bis 6, **dadurch gekennzeichnet, dass** an jeder Aufnahme (11) genau eine Werkzeugaufnahme (12) und eine Werkstückaufnahme (13) vorhanden ist.

8. Werkzeugmaschine (1) nach einem der Ansprüche 1 bis 7, **dadurch gekennzeichnet, dass** eine Aufnahme (11) eine Werkzeugaufnahme (12) und eine unterhalb dieser liegende Werkstückaufnahme (13) mit einer Auflagefläche (14) aufweist, wobei auf der Auflagefläche (14) ein Werkstück (8) oder ein Werkstückspanner mit einem darin eingespannten Werkstück (8) gelagert werden kann.

9. Werkzeugmaschine (1) nach einem der Ansprüche 1 bis 8, **dadurch gekennzeichnet, dass** die Werkstückaufnahme (13) mit der zugeordneten Werkzeugaufnahme (12) ein Bauteil bildet oder dass die Werkstückaufnahme (13) über ein Kopplungselement an die Werkzeugaufnahme (12) angebunden ist.

10. Werkzeugmaschine (1) nach einem der Ansprüche 1 bis 9, **dadurch gekennzeichnet, dass** ein Werkstückgreifer (15) vorhanden ist, mittels dessen ein Werkstück (8) aus einer Werkstückaufnahme (13) aufnehmbar oder in dieser ablegbar ist.

11. Werkzeugmaschine (1) nach Anspruch 10, **dadurch gekennzeichnet, dass** der Werkstückgreifer (15) an einem Spindelstock (6) der Spindeleinheit (3) befestigt ist, oder dass der Werkstückgreifer (15) ein in einer Werkzeugaufnahme (12) ablegbares Werkzeug (10) bildet.

12. Werkzeugmaschine (1) nach einem der Ansprüche 1 bis 11, **dadurch gekennzeichnet, dass** diese von einer Steuereinheit gesteuert wird.

13. Werkzeugmaschine (1) nach Anspruch 12, **dadurch gekennzeichnet, dass** zur Steuerung des Werkzeugwechslers (4) die Steuereinheit eine Adresse einer Aufnahme (11) aufruft, wodurch einer Transferbewegung des Werkzeugwechslers (4) derart bewirkt wird, dass die mit dieser Adresse adressierte Aufnahme (11) in eine Entnahmeposition verfahren wird, in welcher ein Werkzeug (10) oder eine Messeinheit oder ein Werkstück (8) aus der Aufnahme (11) entnehmbar oder dieser zuführbar ist.

14. Werkzeugmaschine (1) nach einem der Ansprüche 12 oder 13, **dadurch gekennzeichnet, dass** Messdaten, die bei einer Vermessung eines Werkstücks (8) mittels einer Messeinheit ermittelt werden, in der Steuereinheit abgespeichert werden.

15. Werkzeugmaschine (1) nach einem der Ansprüche 1 bis 14, **dadurch gekennzeichnet, dass** der Werkzeugwechsler (4) in dieser integriert ist.
